**Europäisches Patentamt**

**European Patent Office**

**Office européen des brevets**

(19)

(11) Numéro de publication : **0 333 539 B1**

# FASCICULE DE BREVET EUROPEEN

(12)

(45) Date de publication du fascicule du brevet :
**14.10.92 Bulletin 92/42**

(51) Int. Cl.⁵ : **H02K 41/06, H02K 7/06**

(21) Numéro de dépôt : **89400536.2**

(22) Date de dépôt : **27.02.89**

(54) **Moteur pas à pas linéaire débrayable à rotor recentré.**

(30) Priorité : **14.03.88 FR 8803361**

(43) Date de publication de la demande :
**20.09.89 Bulletin 89/38**

(45) Mention de la délivrance du brevet :
**14.10.92 Bulletin 92/42**

(84) Etats contractants désignés :
**DE FR GB IT NL SE**

(56) Documents cités :
**EP-A- 0 078 740**
**DE-C- 932 077**
**FR-A- 1 317 985**

(56) Documents cités :
**FR-A- 2 439 502**
**FR-A- 2 492 605**
**GB-A- 1 246 444**
**US-A- 3 512 019**

(73) Titulaire : **CROUZET Société Anonyme**
**4, rue François Ory**
**F-92128 Montrouge (FR)**

(72) Inventeur : **Spiesser, Gilbert**
**10 Impasse des Cerisiers**
**30100 Ales (FR)**

(74) Mandataire : **Bloch, Gérard et al**
**2, square de l'Avenue du Bois**
**F-75116 Paris (FR)**

EP 0 333 539 B1

## Description

La présente invention a pour objet un moteur électrique pas à pas linéaire comprenant un stator multipolaire pourvu d'un alésage fileté, un rotor de diamètre inférieur à celui dudit alésage, fileté au même pas que ledit alésage et roulant de manière cycloïdale à l'intérieur de celui-ci sous l'action de forces statoriques, et une tige motrice solidaire axialement dudit rotor et entraînée ainsi en translation linéaire.

Un tel moteur est utilisé, par exemple, dans les systèmes de régulation de précision. Dans ces systèmes, la tige motrice, qui se déplace linéairement et pas à pas, commande des organes de régulation. On l'appelle souvent tige de commande.

On connaît déjà un moteur de ce type, décrit dans le brevet européen EP-A- 0 078 740. Les filets du rotor sont, le plus souvent, des rainures parallèles, au même pas que les filets du stator, qui sont alors hélicoïdaux et obtenus par taraudage de l'alésage du stator. Le mouvement de rotation du rotor est ainsi transformé en mouvement linéaire.

Lorsque les bobines du stator sont successivement excitées, le rotor, sous l'action des forces statoriques, tourne selon des pas angulaires dont le nombre, sur 360°, est défini par le nombre de pôles du stator. A chaque tour du rotor correspond ainsi une avance axiale correspondant au pas du stator.

Lorsqu'aucune des bobines du stator n'est excitée, le rotor n'est plus attiré par le stator, il est en situation dite débrayée et peut être ramené, par des moyens de rappels adaptés, vers l'une des positions extrêmes de la plage de positions axiales qu'il peut occuper relativement au stator. Cette position extrême constitue alors sa position de repos.

Dans ce type de moteur, le rotor étant animé d'un mouvement cycloïdal, la tige motrice, ou tige de commande, se trouve animée d'un mouvement qui fait décrire à son axe un cylindre circulaire. Comme l'organe à commander n'est, en général, pas susceptible de s'accomoder de ce mouvement, la tige de commande est reliée à l'organe à commander par une double articulation, ou elle comporte une partie souple intermédiaire. Ces solutions présentent les inconvénients de manquer de précision, d'être complexes et onéreuses et de ne permettre, dans le cas où on utilise une partie souple intermédiaire, qu'un seul sens de marche: celui pour lequel cette partie est en traction. Un autre inconvénient de ce type de moteur est que le débrayage n'est pas franc et que le retour en position extrême du rotor entraîne un effet de lime par friction des sommets des filets du stator contre les stries du rotor, cette friction étant génératrice d'usure et de bruit.

Dans un domaine technique différent, mais voisin de celui du domaine des moteurs électriques pas à pas linéaire, à savoir celui des moteurs électriques pas à pas rotatifs, on connaît de nombreux types de liaison entre le rotor, également animé d'un mouvement cycloïdal, et l'arbre de sortie du moteur, qui, pour des raisons évidentes de commodité d'emploi, doit tourner sur lui même autour d'un axe fixe.

C'est ainsi que le brevet GB-A-1 246 444 décrit divers moyens de transmission du mouvement de rotation du rotor à l'arbre de sortie, moyens qui s'accomodent du mouvement cycloïdal du rotor tandis que l'axe de l'arbre de sortie reste fixe. Ces moyens sont, par exemple, des articulations à la cardan, des soufflets ou encore des cames excentriques.

De même, le brevet US-A-3 512 019, décrit un anneau souple qui transmet le mouvement du rotor, dont l'axe décrit ici un cône, à l'arbre de sortie.

Par ailleurs, la demande FR-A-2 492 605 décrit des disques en matériau élastique qui, en plus de leur fonction de transmission du mouvement du rotor à l'arbre de sortie, ont pour fonction de maintenir, même au repos, une génératrice du rotor en contact avec une génératrice de l'alésage du stator.

Enfin, le brevet français FR-A-1 317 985 décrit un accouplement élastique articulé qui s'accomode du mouvement cycloïdal du rotor, mouvement cycloïdal d'amplitude variable ici, pour entraîner une variation de la vitesse de rotation de l'arbre de sortie.

Tous ces dispositifs de liaison flexibles ou articulés ayant pour fonction de transmettre le mouvement de rotation du rotor à l'arbre de sortie doivent être indéformables sous l'action d'une contrainte en torsion, tout en étant très déformables et très souples sous l'action d'une contrainte en cisaillement. Leur emploi dans le moteur linéaire du type défini ci-dessus ne supprimerait pas l'inconvénient mentionné.

La présente invention vise, elle, à supprimer cet inconvénient en procurant notamment un moteur linéaire pas à pas dont le débrayage soit franc, afin de diminuer usure et bruit.

A cet effet, elle a pour objet un moteur linéaire pas à pas du type défini ci-dessus, caractérisé par le fait que ladite tige est rigide, et qu'il est prévu des moyens pour l'immobiliser radialement au centre dudit alésage, ainsi que des moyens élastiques de rappel de recentrage pour centrer ledit rotor sur ladite tige en l'absence de forces statoriques.

Dans le moteur de l'invention, dès que l'excitation du stator cesse, le rotor est recentré sur la tige motrice par les moyens élastiques de rappel de recentrage. Comme la tige motrice est rigide et elle-même immobilisée radialement au centre de l'alésage, le rotor se trouve parfaitement au centre de l'alésage, ce qui dégage franchement ses filets de ceux de l'alésage, et permet le rappel de l'ensemble comprenant tige et rotor dans sa position de repos sans usure et sans bruit. Il est à noter ici que les moyens de rappel de recentrage élastiques du rotor sur la tige n'ont pas à transmettre le mouvement de rotation du rotor à la tige, celle-ci étant en général, et par ailleurs, immobilisée en rotation sur elle-même. Aucune contrainte ne leur est imposée concernant la résistance à la torsion. Par contre, ils doivent rappeler efficacement le rotor sur la tige afin que celui-ci se trouve parfaitement centré dès que l'excitation statorique cesse.

Dans une forme de réalisation, ledit rotor est un cylindre creux de diamètre intérieur supérieur à celui de ladite tige et traversé par celle-ci, et lesdits moyens élastiques de rappel de recentrage comprennent au moins deux anneaux en matériau élastique disposés à distance l'un de l'autre entre ladite tige et ledit rotor.

Une telle forme de réalisation est très simple et d'un prix de revient peu élevé.

Dans une autre forme de réalisation, ledit rotor est un cylindre creux de diamètre supérieur à celui de ladite tige et traversé par celle-ci, et lesdits moyens élastiques de rappel de recentrage comprennent deux manchons à section axialement décroissante, montés coulissants sur ladite tige et rappelés élastiquement et axialement contre deux surfaces annulaires solidaires des deux extrémités dudit rotor.

Cette forme de réalisation est particulièrement robuste.

Les manchons peuvent être coniques, ou hémisphériques. Dans ce dernier cas, le rappel du rotor sur la tige est particulièrement efficace, tout en autorisant un déplacement excentrique facile.

Avantageusement, lesdites surfaces annulaires sont coniques.

Avantageusement encore, lesdits manchons sont disposés à l'extérieur dudit rotor et ils sont rappelés élastiquement et axialement par un unique ressort qui rappelle de plus, en l'absence de forces statoriques, l'ensemble comprenant ladite tige et ledit rotor dans une des deux positions extrêmes de sa plage de positions axiales possibles.

On obtient ainsi une réalisation dont le fonctionnement est très faible, et qui ne met en oeuvre qu'un unique ressort pour rappeler le rotor en position centrée sur la tige avant de le repousser en position de repos, ces deux opérations étant, à coup sûr, effectuées dans cet ordre,ce qui évite usure et bruit.

L'invention sera mieux comprise à l'aide de la description suivante de deux formes de réalisation préférées du dispositif de l'invention et de leurs variantes, ladite description étant faite à titre d'exemple non limitatif et en relation avec les dessins joints, dans lesquels :

- la figure 1 représente une vue générale en coupe d'une première forme de réalisation du moteur de l'invention,
- la figure 2 représente, en coupe, une vue détaillée de la tige motrice et du rotor du moteur de la figure 1,
- la figure 3 représente, en coupe, une vue détaillée de la tige motrice et du rotor d'une deuxième forme de réalisation du moteur de l'invention, et,
- la figure 4 représente, en coupe, une vue détaillée de la tige motrice et du rotor d'une variante de réalisation du moteur de la figure 3.

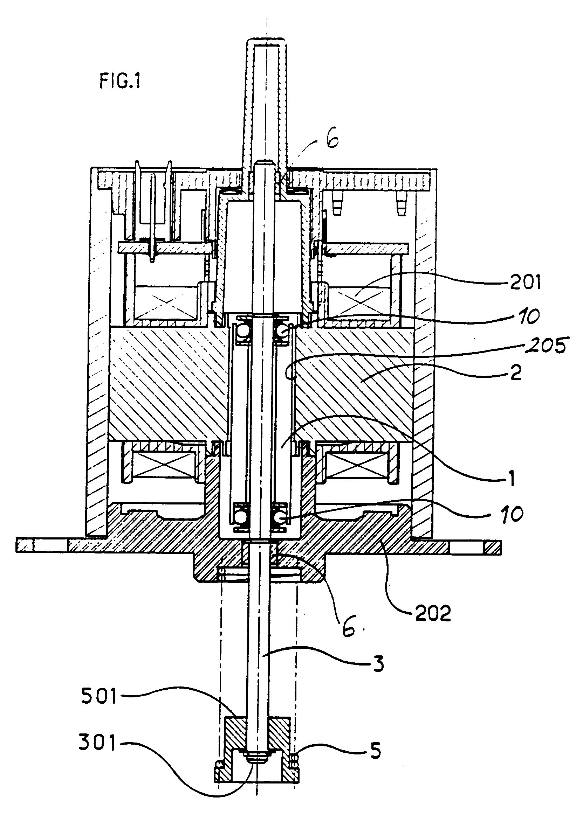

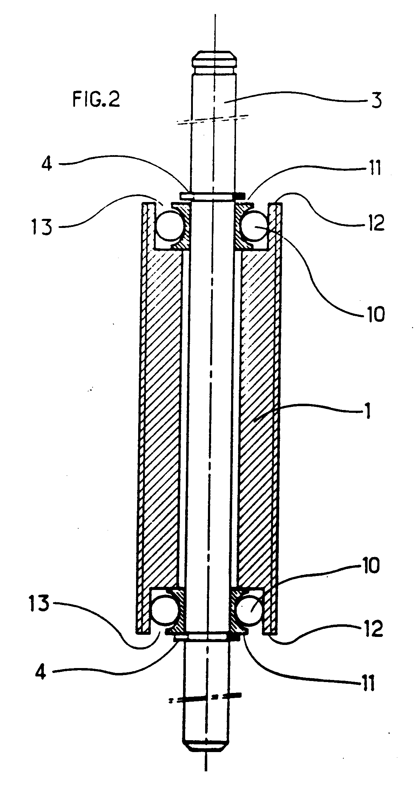

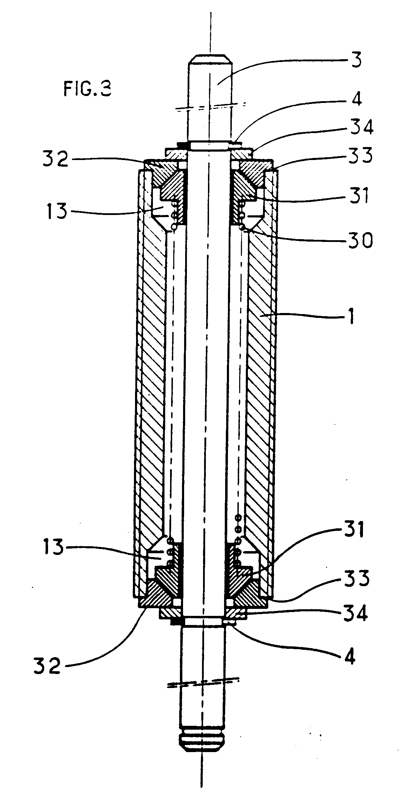

En référence aux figures 1 et 2, un moteur comprend un stator multipolaire 2 pourvu d'un alésage fileté 205, chaque pôle étant entouré d'une bobine 201.

Une tige motrice, ou tige de commande, 3 est montée mobile en translation suivant l'axe du stator 2 et immobilisée radialement au centre de l'alésage du stator 2 par des paliers 6. Un moyen de rappel élastique 5, ici un ressort hélicoïdal prenant appui d'une part sur le flasque avant 202 du moteur et d'autre part sur une chappe 501 solidaire de l'extrémité externe 301 de la tige 3, tend à rappeler la tige 3 en position sortie.

Un rotor 1 en forme de cylindre creux, fileté au même pas que l'alésage 205 du stator, est monté coaxialement autour de la tige de commande 3, son diamètre maximal externe étant inférieur au diamètre minimal interne de l'alésage 205 du stator 2. Le diamètre intérieur du rotor 1 est supérieur au diamètre extérieur de la tige de commande 3.

Comme le montre la figure 2, chacune des deux extrémités 12 du rotor 1 comporte un lamage 13. Dans l'espace dégagé par chacun des lamages se trouve une bague 11 de diamètre interne correspondant sensiblement au diamètre externe de la tige de commande 3, et dont la dimension axiale est sensiblement égale à la profondeur du lamage afin de coopérer par appui au fond dudit lamage. Le pourtour externe de chaque bague 11 a un profil de gorge, cette gorge reçoit un anneau torique 10 en matériau élastique dont le diamètre externe correspond sensiblement au diamètre du lamage 13 et prend appui sur la surface cylindrique de celui-ci. Les deux anneaux toriques 10 sont ainsi disposés à distance l'un de l'autre. L'épaisseur de chaque bague 11 est telle qu'elle soit inférieure à la demi - différence entre le diamètre du lamage 13 et le diamètre interne du rotor 1 et soit supérieure à la différence entre le diamètre interne du rotor 1 et celui de la tige 3; de cette manière le rotor 1 peut être animé d'un mouvement radial par rapport à la tige 3 et quel que soit l'amplitude de ce mouvement les bagues 11 coopèrent en appui dans le fond des lamages 13.

Deux anneaux élastiques 4 montés chacun par enclipsage dans une gorge de la tige de commande 3 coopèrent de part et d'autre de l'ensemble rotor 1, bagues 11 et anneaux toriques 10 afin de le rendre solidaire axialement de la tige de commande 3.

De manière connue, lorsque les bobines 201 du stator 2 sont successivement alimentées en énergie électrique, le rotor roule de manière cycloïdale à l'intérieur de l'alésage du stator sous l'action des forces statoriques. La coopération des filetages du rotor 1 et du stator 2 fait que ce mouvement cycloïdal s'accompagne d'un déplacement relatif axial du rotor 1 et du stator 2, qui entraîne ainsi la tige 3 en translation linéaire axiale.

Ce mouvement cycloïdal s'accompagne de la compression des anneaux toriques 10 : lorsque le rotor 1 est attiré radialement vers le pôle statorique excité, la portion des anneaux toriques 10 diamétralement opposée audit pôle se comprime et permet au rotor 1 de coopérer avec le stator 2 par engagement mutuel de leurs filetages respectifs au voisinage du pôle statorique excité.

Lors de l'arrêt de l'excitation statorique, le rotor 1 est rappelé par les anneaux toriques 10 dans la position où il est centré sur la tige 3, et où son axe coïncide avec celui de l'alésage 205 du stator 2. Les filets du rotor 1 et de l'alésage 205 ne coopèrent plus. Le moteur est ainsi débrayé.

Ainsi les anneaux toriques 10, élastiques, rappellent le rotor 1 pour le centrer sur la tige 3 en l'absence de forces statoriques.

Dans l'exemple décrit ici, le ressort 5 rappelle l'ensemble comprenant la tige 3 et le rotor 1 dans leur position de repos, qui correspond à une des deux positions extrêmes de la plage de positions axiales possibles de cet ensemble relativement au stator. Ici, la position de repos correspond à celle où la tige 3 est sortie au maximum de l'alésage du stator. Naturellement, un autre arrangement du ressort 5 permettrait d'avoir une position de repos correspondant à la tige 3 rentrée. On peut aussi, dans certaines applications, supprimer le ressort 5 afin que la tige reste, en l'absence d'excitation, à l'endroit où elle se trouve au moment de la cessation de l'excitation, plutôt que de revenir systématiquement à la même position de repos.

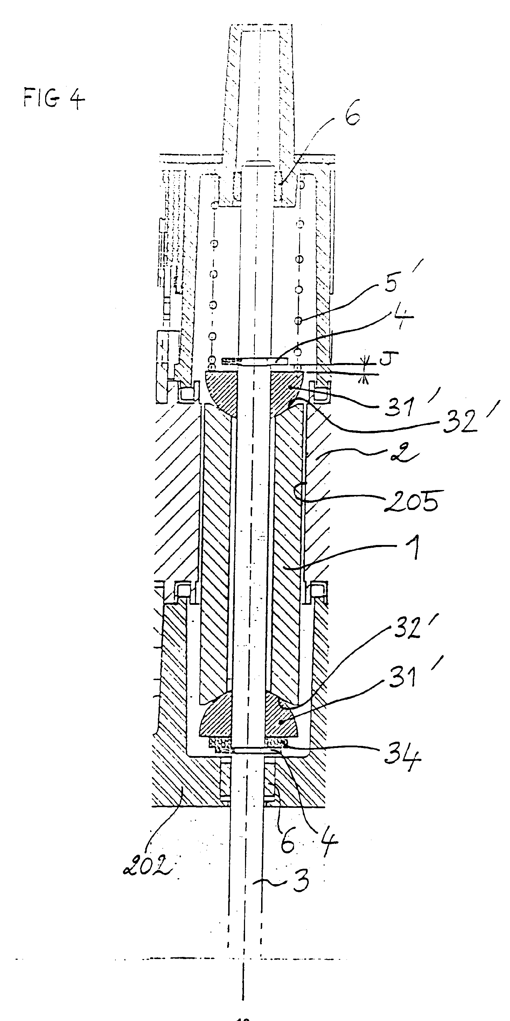

Dans une deuxième forme de réalisation du dispositif de l'invention et en référence à la figure 3, le centrage du rotor 1 par rapport à la tige de commande 3 qui le traverse est réalisé par deux manchons coniques 31 montés coulissants autour de la tige de commande 3 et reliés entre eux par un ressort hélicoïdal 30 monté coaxialement autour de la tige de commande 3.

Chacun des deux manchons coniques 31 est ainsi rappelé élastiquement et axialement contre une surface annulaire, ici également conique, d'une douille 32 solidaire de chacune des extrémités du rotor 1. Chaque douille 32 est pourvue d'un épaulement 33 et emmanchée dans chacun des lamages 13.

Les manchons 31 sont disposés à l'intérieur du rotor 1 et chaque douille 32 est maintenue en appui contre chaque extrémité plane du rotor 1 par une rondelle 34 intercalée entre ladite douille et un anneau élastique 4 solidaire de la tige de commande 3. L'épaisseur de chaque rondelle 34 est telle que le rotor 1 est rendu longitudinalement solidaire de la tige 3.

Le diamètre de l'alésage des douilles 32 est supérieur à celui de la tige de commande 3 de manière à permettre un déplacement radial du rotor 1 apte à le faire coopérer avec l'alésage du stator 2.

Lorsque le rotor 1 est attiré vers l'un des pôles du stator 2, il y a déplacement radial dudit rotor 1 par glissement des manchons coniques 31 sur les surfaces annulaires des douilles 32. Il en résulte un rapprochement linéaire des manchons 31 suivant l'axe du rotor 1 et une compression du ressort 30.

En l'absence de toute excitation statorique, les manchons coniques 31, par glissement sur les douilles 32 et sous l'action du ressort 30 recentrent le rotor 1 autour de la tige de commande 3 et assurent ainsi le débrayage du moteur.

Sur la figure 4 est représenté une variante de réalisation de l'ensemble représenté sur la figure 3. Ici, les manchons coniques 31 sont remplacés par des manchons hémisphériques 31' qui sont disposés à l'extérieur du rotor 1, de part et d'autre de celui-ci. Chacun des manchons 31' est rappelé contre deux surfaces annulaires 32', portées par les extrémités du rotor 1 et ici coniques, par un ressort hélicoïdal 5' monté coaxialement autour de la partie supérieure, sur la figure 4, de la tige 3. Le ressort 5' est en appui d'une part sur la partie arrière du boîtier du moteur, représentée sur la partie supérieure de la figure 4 et d'autre part sur le manchon 31' supérieur, sur la figure 4. Entre les deux anneaux élastiques 4 qui rendent solidaires axialement le rotor 1 de la tige 3 on trouve, de bas en haut sur la figure 4 : une rondelle 34, le manchon hémisphérique 31' inférieur, le rotor 1, et le manchon hémisphérique 31' supérieur. Lorsque le moteur est débrayé, le rotor 1 est centré sur la tige 3 par les manchons hémisphériques 31' et un jeu J est ménagé entre le manchon hémisphérique 31' supérieur et l'anneau 4 supérieur. Lorsque, sous l'action des forces statoriques, le rotor 1 est attiré par un des pôles du stator 2 et se décentre, le manchon hémisphérique 31' inférieur reste en appui contre la rondelle 34, et le manchon hémisphérique 31' supérieur est repoussé vers le haut de la figure 4 d'une quantité inférieure au jeu J. Lorsque le stator cesse d'être excité, le ressort 5' repousse le manchon hémisphérique 31' supérieur contre la surface annulaire conique 32' du rotor, ce qui a pour effet de recentrer le rotor 1 sur la tige 3, un phénomène similaire se produisant entre le manchon hémisphérique 31' inférieur et la surface annulaire 32' correspondante. Les filets du rotor 1 et de l'alésage du stator 2 sont dégagés, et le ressort 5' repousse alors l'ensemble comprenant la tige 3 et le rotor 1 vers la position de repos où la tige est sortie, position représentée sur la figure 4. Le ressort 5', en plus de sa fonction de recentrage du rotor 1, par l'intermédiaire des manchons 31', a la fonction du ressort 5 de la figure 1, qui peut être, dans ce cas, supprimé.

Naturellement, la présente invention n'est pas limitée aux manchons coniques 31 ou hémisphériques 31' qui viennent d'être décrits à titre d'exemple. C'est ainsi qu'il est suffisant, pour obtenir un recentrage, que ces manchons soient à section axialement décroissante, et que leurs extrémités de faible section soient rappelées élastiquement contre les surfaces annulaires telles que 32 et 32′ solidaires des extrémités du rotor 1. Il n'est pas non plus obligatoire que ces surfaces annulaires 32 et 32′ soient coniques, celles-ci pouvant avoir toute forme appropriée pour favoriser le glissement contre les manchons coulissants 31 ou 31′.

## Revendications

1. Moteur électrique pas à pas linéaire comprenant un stator (2) multipolaire pourvu d'un alésage fileté (205), un rotor (1) de diamètre inférieur à celui dudit alésage, fileté au même pas que ledit alésage (205) et roulant de manière cycloïdale à l'intérieur de celui-ci sous l'action de forces statoriques, et une tige motrice (3) solidaire axialement dudit rotor (1) et entraînée ainsi en translation linéaire, moteur caractérisé par le fait que ladite tige (3) est rigide, et qu'il est prévu des moyens (6) pour l'immobiliser radialement au centre dudit alésage (205), ainsi que des moyens élastiques de rappel de recentrage (10; 30, 31, 32; 5′, 31′, 32′) pour centrer ledit rotor (1) sur ladite tige (3) en l'absence de forces statoriques.

2. Moteur selon la revendication 1, dans lequel ledit rotor (1) est un cylindre creux de diamètre intérieur supérieur à celui de ladite tige (3) et traversé par celle-ci, et lesdits moyens élastiques de rappel de recentrage comprennent au moins deux anneaux (10) en matériau élastique disposés à distance l'un de l'autre entre ladite tige (3) et ledit rotor (1).

3. Moteur selon la revendication 1, dans lequel ledit rotor (1) est un cylindre creux de diamètre supérieur à celui de ladite tige (3) et traversé par celle-ci, et lesdits moyens élastiques de rappel de recentrage comprennent deux manchons (31; 31′) à section axialement décroissante, montés coulissants sur ladite tige (3) et rappelés élastiquement et axialement contre deux surfaces annulaires (32; 32′) solidaires des deux extrémités dudit rotor (1).

4. Moteur selon la revendication 3, dans lequel lesdits manchons (31) sont coniques.

5. Moteur selon la revendication 3, dans lequel lesdits manchons (31′) sont hémisphériques.

6. Moteur selon l'une des revendications 3 à 5, dans lequel lesdites surfaces annulaires (32; 32′) sont coniques.

7. Moteur selon l'une des revendications 3 à 6, dans lequel lesdits manchons (31′) sont disposés à l'extérieur dudit rotor (1) et ils sont rappelés élastiquement et axialement par un unique ressort (5′) qui rappelle de plus, en l'absence de forces statoriques, l'ensemble comprenant ladite tige (3) et ledit rotor (1) dans une des deux positions extrêmes de sa plage de positions axiales possibles.

## Patentansprüche

1. Linearschrittmotor umfassend einen mehrpoligen Ständer (2) mit einer Gewindebohrung (205), einen Läufer (1), dessen Durchmesser kleiner als der der besagten Bohrung ist, der die gleiche Gewindesteigung wie die besagte Bohrung (205) aufweist und der in dieser in zykloider Weise unter dem Einfluß vom Ständer her wirkender Kräfte rotiert, und einen Antriebsschaft (3), welcher axial mit dem besagten Läufer (1) fest verbunden ist und dadurch linear angetrieben wird, Motor dadurch gekennzeichnet, daß der besagte Schaft (3) starr ist und Mittel (6) vorgesehen sind, um ihn radial in der Mitte der besagten Bohrung (205) zu fixieren, sowie elastische Rückstell-Rückzentrierungsmittel (10; 30, 31, 32; 5′, 31′, 32′), um den besagten Läufer (1) mangels vom Ständer her wirkender Kräfte auf dem besagten Schaft (3) zu zentrieren.

2. Motor gemäß Anspruch 1, bei welchem der besagte Läufer (1) ein hohler Zylinder ist, dessen Innendurchmesser größer als der des besagten , durch ihn hindurchgehenden Schaftes (3) ist, und bei welchem die besagten elastischen Rückstell-Rückzentrierungsmittel mindestens zwei Ringe (10) aus elastischem Material umfassen, die in einem Abstand voneinander zwischen dem besagten Schaft (3) und dem besagten Läufer (1) angeordnet sind.

3. Motor gemäß Anspruch 1, bei welchem der besagte Läufer (1) ein hohler Zylinder ist, dessen Durchmesser größer als der des besagten, durch ihn hindurchgehenden Schaftes (3) ist, und bei welchem die besagten elastischen Rückstell-Rückzentrierungsmittel zwei Muffen (31; 31′) mit axial abnehmendem querschnitt umfassen, die auf dem besagten Schaft (3) verschiebbar gelagert sind und elastisch und in axialer Richtung gegen zwei ringförmige Flächen (32; 32′) rückgestellt werden, die mit den beiden Enden des besagten Läufers (1) fest verbunden sind.

4. Motor gemäß Anspruch 3, bei welchem die besagten Muffen (31) konisch sind.

**5.** Motor gemäß Anspruch 3, bei welchem die besagten Muffen (31') halbkugelförmig sind.

**6.** Motor gemäß einem der Ansprüche 3 bis 5, bei welchem die besagten ringförmigen Flächen (32; 32') konisch sind.

**7.** Motor gemäß einem der Ansprüche 3 bis 6, bei welchem die besagten Muffen (31') außerhalb des besagten Läufers (1) angeordnet sind und elastisch und in axialer Richtung durch eine einzige Feder (5') rückgestellt werden, welche außerdem, mangels vom Ständer her wirkender Kräfte, die aus dem besagten Schaft (3) und dem besagten Läufer (1) bestehende Einheit in eine der beiden äußersten Positionen ihres möglichen Axialpositionsbereiches rückstellt.

**Claims**

**1.** Electric linear stepper motor comprising a multipolar stator (2) with a threaded bore (205), a rotor (1) of a diameter less than that of said bore, threaded to the same pitch as said bore (205) and rolling cycloidally inside the latter under the action of stator forces, and a drive rod (3) axially fast with said rotor (1) and thus driven in linear translation, motor characterized in that said rod (3) is rigid and that means (6) are provided for immobilizing it radially in the center of said bore (205) as well as resilient return recentering means (10;30,31,32;5',31',32') for centering said rotor (1) on said rod (3) in the absence of stator forces.

**2.** Motor as claimed in claim 1, wherein said rotor (1) is a hollow cylinder having an internal diameter greater than that of said rod (3) and through which the latter passes and said resilient return recentering means comprise at least two rings (10) made of a resilient material and disposed at a distance from each other between said rod (3) and said rotor (1).

**3.** Motor as claimed in claim 1, wherein said rotor (1) is a hollow cylinder having a diameter greater than that of said rod (3) and through which the latter passes, and said resilient return recentering means comprise two sleeves (31;31') with axially decreasing section, mounted for sliding on said rod (3) and returned resiliently and axially against two annular surfaces (32;32') fast with both ends of said rotor (1).

**4.** Motor as claimed in claim 3, wherein said sleeves (31) are tapered.

**5.** Motor as claimed in claim 3, wherein said sleeves (31') are hemispherical.

**6.** Motor as claimed in one of claims 3 to 5, wherein said annular surfaces (32;32') are tapered.

**7.** Motor as claimed in one of claims 3 to 6, wherein said sleeves (31') are disposed outside said rotor (1) and they are returned resiliently and axially by a single spring (5') which, in the absence of stator forces, in addition returns the assembly comprising said rod (3) and said rotor (1) into one of the two endmost positions of its range of possible axial positions.

FIG.1

FIG.2

FIG.3

FIG 4

6

5′

4

J

31′

32′

2

205

1

32′

31′

34

202

6  4

~ 3